# EUROPEAN PATENT APPLICATION

(11) **EP 4 046 979 A1**
(43) Date of publication of application: **24.08.2022**
(21) Application number: 21425005.2
(22) Date of filing: 19.02.2021
(51) Int. Cl.: C04B 40/06, C04B 26/26, C04B 28/02, C04B 28/04, C04B 28/06, C04B 28/08, C04B 28/12, C04B 28/14, C08L 95/00

(54) **TWO COMPONENT WATERPROOFING MEMBRANE**

(71) Applicant: Sika Technology AG, 6340 Baar (CH)
(72) Inventor: Barucco, Ezio, 37129 Verona (IT); Benighaus, Tobias, 48165 Münster (DE); Camurati, Marco, 41053 Maranello (IT); Fazzini, Francesco, 41013 Castelfranco Emilia (IT); Granizo Fernandez, Luz, 28043 Madrid (ES); Kighelman, Julien, 38090 Villefontaine (FR); Kupich, Jan, 59379 Selm (DE); Longo, Matteo, 37057 San Giovanni Lupatoto (VR) (IT); Perrino, Luigi, 38069 Nago Torbole (IT)
(74) Representative: Sika Patent Attorneys

(57) **Abstract**

The present invention relates to a two-component waterproofing membrane consisting of
a first component A comprising or consisting of
a) 5 - 60 mass parts, preferably 30 - 60 mass parts, more preferably 45 - 55 mass parts, of a hydraulic binder,
b) 0.5 - 15 mass parts, preferably 1 - 5 mass parts of at least one synthetic polymer,
c) 20 - 80 mass parts, preferably 30 - 50 mass parts of aggregates, and
d) optionally further additives
and a second component B comprising or consisting of an aqueous emulsion of bitumen.

## Description

### Technical field

The present invention relates to a two-component waterproofing membrane consisting a first component A comprising a hydraulic binder, at least one synthetic polymer, and aggregate, and a second component B comprising an aqueous emulsion of bitumen. The present invention also relates to processes for the waterproofing of porous construction materials using the two-component waterproofing membrane.

### Background of the invention

Water absorption of porous construction materials is one of the main causes for damages and optical defects. Water penetrates through the pore structure into construction materials such as mortar, concrete, masonry, or tiles. Water is further transported by capillary suction from the surface into the bulk of these materials. Such water penetration may cause damages such as corrosion of rebars, frost and de-icing salt damage or optical defects such as efflorescence. It is well known that waterproofing of construction materials is necessary to reduce or prevent damages.

Cementitious waterproofing membranes are widely used in the construction industry. They are used, for instance, under tiles and stones on balconies, terraces, swimming pools or bathrooms to protect the structure from the ingress of water. Cementitious waterproofing membranes generally have the advantage of fast hardening but also display a low elasticity. Therefore, they frequently comprise polymers or copolymers of vinylacetate, acrylate, styrene, and butadiene or polyurethanes. One disadvantage is that the polymeric ingredients add a significant cost to the cementitious materials. Also, it is generally desirable to increase the waterproofing performance of cementitious waterproofing membranes.

In the case of floor construction it is frequently necessary to apply waterproofing membranes to the screed and before installation of a levelling material or any subsequent materials. This is necessary to protect the levelling material and any subsequent materials (e.g. adhesives, floor coverings) from residual moisture rising from the screed, for example to ensure sufficient adhesion and fast hardening.

Typically, primers based on reactive epoxy or polyurethane resins are used. Such primers have the disadvantage of being harmful to the health of the applicator. Also, they often require more than one application step with a waiting time in between.

Bituminous thick coatings are also widely known to be useful as waterproofing membranes in construction. One advantage of such materials is their high elasticity and good waterproofing performance. However, they typically require long drying times.

DE 10 2014 001 079 is concerned with a two-component waterproofing material consisting of a liquid component consisting of an anionic bitumen emulsion with 50 - 65% solids content and an anionic polymer dispersion with 35 - 65% solids content, as well as a powder component consisting of a mineral sealing slurry. This waterproofing material may harden within 24h and further layers can then be applied.

There is a general need for further cementitious waterproofing membranes with excellent waterproofing properties and that can harden in even shorter time than previously known.

### Summary of the invention

It is an objective of the present invention to provide a waterproofing membrane with excellent waterproofing properties and that can overcome the problems of the prior art.

This objective is achieved by a waterproofing membrane as disclosed in claim 1.

Surprisingly, it has been found that a waterproofing membrane comprising or consisting of a first component A and a second component B as claimed in claim 1 has improved waterproofing properties. A waterproofing membrane of the present invention can be applied to porous construction materials. It is especially possible to use a waterproofing membrane of the present invention as a barrier against water vapor and/or liquid water. Thus, further layers of materials are protected against the action of moisture.

It is another advantage that, according to certain embodiments, a waterproofing membrane of the present invention shows very fast hardening. It is thus possible to accelerate the process of installation and building by the use of such waterproofing membrane. It is for example possible to walk on a waterproofing membrane of the present invention within 2 - 2.5 hours after application.

It is yet another advantage, that a waterproofing membrane of the present invention can have self-levelling properties. This makes the application of the waterproofing membrane particularly simple.

Generally, a waterproofing membrane of the present invention has a very low shrinkage. This is important to prevent the formation of any stress in the material itself, or in any layers beneath or on top of the waterproofing membrane.

Further aspects of the present invention are the subject of independent claims. Preferred embodiments of the present invention are subject of the dependent claims.

### Ways of carrying out the invention

In a first aspect the present invention relates to a two-component waterproofing membrane consisting of a first component A and a second component B, said first component A comprising or consisting of
a) 5 - 60 mass parts, preferably 30 - 60 mass parts, more preferably 45 - 55 mass parts of a hydraulic binder,
b) 0.5 - 15 mass parts, preferably 1 - 5 mass parts of at least one synthetic polymer,
c) 20 - 80 mass parts, preferably 30 - 50 mass parts of aggregates, and
d) optionally further additives
and said second component B comprising or consisting of an aqueous emulsion of bitumen.

The two-component waterproofing membrane of the present invention consists of a first component A and a second component B. Component A and component B are stored in separate compartments. Mixing of the component A and the component B to form a waterproofing membrane of the present invention is preferably done at the place of usage and shortly before the planned usage. This is because upon mixing the component A and the component B hardening starts.

The hydraulic binder in component of a waterproofing membrane of the present invention preferably is selected from Portland cement, aluminate cement, calcium sulfoaluminate cement, a source of calcium sulfate, natural hydraulic lime, slag, pozzolanes, and mixtures thereof.

Portland Cement within the present context is understood to mean a cement of the type CEM I, CEM II, CEM III, CEM IV or CEM V according to standard EN 197-1:2018-11. A Portland cement can also be a mixture of these cement types. Portland cements described in alternative standards, e.g. ASTM standards or Chinese standards, are equally suitable. The clinker content in a Portland cement of the present invention is preferably at least 65% by weight, based on the total dry weight of the cement. In certain embodiments of the present invention, the clinker content is at least 80% by weight, based on the total dry weight of the cement. According to preferred embodiments, the Portland cement used in a hydraulic binder is a CEM I according to EN 197-1:2018-11.

An aluminate cement within the present context is a cement with a main phase consisting of hydraulic calcium aluminates, preferably being CA (CaO · Al₂O₃). Depending on exact type of the aluminate cement, other calcium aluminates such as CA2, C3A, C12A7 are also present. Aluminate cements of the present invention typically also contain other phases selected from belite (C2S), tricalcium silicate, ferrites (C2F, C2AF, C4AF) and ternesite (C5S2$). Aluminate cements of the present invention may further comprise calcium carbonate. In particular, an aluminate cement of the present invention complies with EN 14647:2006-01. Calcium aluminate cement (CAC) is a particularly commonly used type of aluminate cement and is specifically preferred in the context of the present invention. Suitable aluminate cements can be obtained commercially, for example, from Kerneos SA or Royal White Cement.

A calcium sulfoaluminate cement within the present context is a cement with a main phase consisting of C₄(A₃₋ₓFₓ)₃$ (4 CaO · 3-x Al₂O₃ · x Fe₂O₃ · CaSO₄) where x is an integer of from 0 - 3. CSA cements of the present invention typically comprise further phases selected from aluminates (CA, C₃A, C₁₂A₇), belite (C₂S), ferrites (C₂F, C₂AF, C₄AF), ternesite (C₅S₂$) and anhydrite. In the present context C stands for CaO, A stands for Al₂O₃, F stands for Fe₂O₃, and $ stands for CaSO₄. According to certain embodiments CSA cements of the present invention comprise 20-75 w%, preferably 25-50 w% C₄A₃$, 0-10 w%, preferably 1-5 w% aluminates, 0-70 w%, preferably 1-50 w% belite, 0-35 w%, preferably 1-10 w% ferrites, 0-20 w%, preferably 1-10 w% ternesite, 0-50 w%, preferably 5-45 w% anhydrite, and 0-25 w% CaO, preferably 1-20 w% CaO, each based on the total dry weight of the CSA cement. However, the use of calcium sulfoaluminate cement is generally less preferred within the present context.

In the context of the present invention, the source of calcium sulfate preferably is selected from anhydrite (CaSO₄), calcium sulfate hemihydrate (CaSO4 · ½H2O), calcium sulfate dihydrate (CaSO4 · 2 H2O) or mixtures thereof. Here, the calcium sulfate hemihydrate includes the α-calcium sulfate hemihydrate and the β-calcium sulfate hemihydrate. Calcium sulfate of the present invention may be based on FGD gypsum, phosphogypsum, as well as natural gypsum. In preferred embodiments, the source of calcium sulfate is α-calcium sulfate hemihydrate.

The term natural hydraulic lime (NHL), within the present context, refers to materials derived solely from mineral deposits and naturally containing all elements (usually limestone, clay and impurities) to produce a hydraulic lime in a calcination process, typically at temperatures between 800 and 1200 °C. Natural hydraulic lime may act as a hydraulic binder in mortar compositions. NHL in the context of the present invention belongs to any of the classes NHL2, NHL3.5 or NHL5 according to EN 459-1:2015, preferably to classes NHL3.5 or NHL5, more preferred to class NHL5.

A slag, within the present context, is a slag from iron making processes and/or steel making processes. Especially, the slag is selected from ground granulated blast furnace slag, basic oxygen furnace slag, ladle slag and/or electric arc furnace slag, preferably from ground granulated blast furnace slag and/or basic oxygen slag.

The term pozzolane stands in particular for type II concrete additives with latent hydraulic and/or pozzolanic character according to EN 206-1. The term pozzolane thus also encompasses latent hydraulic materials. In particular, pozzolanes are selected from of fly ash, silica fume, microsilica, clay minerals, metakaolin, rice husk ash, burnt shale, pumice, and/or trass.

It is possible that the hydraulic binder of the present invention comprises or consists of a mixture of two or more of Portland cement, aluminate cement, calcium sulfoaluminate cement, a source of calcium sulfate, natural hydraulic lime, slag, and/or pozzolanes. According to preferred embodiments, the hydraulic binder of the present invention is a binary binder comprising or consisting of Portland cement and aluminate cement or calcium sulfoaluminate cement, preferably aluminate cement. According to other preferred embodiments, the hydraulic binder of the present invention is a binary binder comprising or consisting of Portland cement and a source of calcium sulfate. According to further preferred embodiments, the hydraulic binder of the present invention is a binary binder comprising or consisting of Portland cement and natural hydraulic lime. According to still further preferred embodiments, the hydraulic binder of the present invention is a ternary binder comprising or consisting of Portland cement, aluminate cement or calcium sulfoaluminate cement, preferably aluminate cement, and a source of calcium sulfate.

According to special embodiments, the hydraulic binder of component A is a ternary binder comprising or consisting of
a1) 20 - 50, preferably 30 - 40 mass parts of Portland Cement,
a2) 20 - 50, preferably 30 - 40 mass parts of aluminate cement, and
a3) 10 - 50, preferably 15 - 40, especially 20 - 30 mass parts of a source of calcium sulfate.

Preferably, in a ternary binder of the present invention, the source of calcium sulfate is α-calcium sulfate hemihydrate.

According to a particularly preferred embodiment, the ternary binder consists of
a1) 38 mass parts of Portland Cement,
a2) 38 mass parts of calcium aluminate cement, and
a3) 24 mass parts of a source of calcium sulfate.

Synthetic polymers within the present context are polymers which can be produced by polymerization of suitable monomers. Suitable monomers are selected form the group consisting of ethylene, propylene, butylene, isoprene, butadiene, styrene, acrylonitrile, acrylic acid, methacrylic acid, esters of acrylic acid, esters of methacrylic acid, vinylesters, vinylchloride, vinyl alcohol. It is preferred that synthetic polymers are copolymers synthesized from two or more, preferably two, different monomers. Highly preferred are copolymers based on vinyl esters, ethylene and/or acrylic acid esters.

Preferred synthetic polymers are copolymers of vinylacetate and ethylene, vinylacetate and ethylene and methylmethacrylate, vinylacetate and ethylene and vinylester, vinylacetate and ethylene and acrylic acid ester, vinylchloride and ethylene and vinyllaureate, vinylacetate and vinylversatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester. It is possible and in certain cases preferred to use mixtures of more than one of the said synthetic polymers in compositions of the present invention.

Synthetic polymers of the present invention can be used in liquid form such as dispersions of synthetic polymer in solvents, preferably in water. The solid content of such polymer dispersions can vary between 20 w% and 75 w%, based on the weight of the dispersion. Suitable dispersions are for example available from BASF SE under the trade name Acronal or from Synthomer pic under the trade name Revacryl.

Synthetic polymers of the present invention can also be used in solid form such as for example as redispersible polymer powders. The term redispersible polymer powder refers to a powder which contains a polymer and after introduction into water forms a stable dispersion. A redispersible polymer powder encompasses not only the polymer but typically also mixtures thereof with e.g. protective colloids, emulsifiers, and support materials. Such redispersible polymer powders can be manufactured for example by spray drying of polymer dispersions as for example described in patent application EP1042391. Suitable redispersible polymer powders are for example available from Wacker Chemie AG under the trade name Vinnapas. The use of redispersible powders of synthetic polymers is preferred within the context of the present invention.

According to particularly preferred embodiments of the present invention, the synthetic polymer is in the form of a redispersible polymer powder.

The glass transition temperature (Tg) of said synthetic polymers can vary in a wide range. Preferably, the polymer is soft and flexible and has a glass transition temperature of -45 °C - +10 °C, especially -35 °C - +5 °C, preferably -25 °C - 0 °C, in particular -20 °C - 0 °C, particularly preferred -20 °C - -10°C. Most preferred are redispersible polymer powders with these glass transition temperatures. The Tg of polymers can be measured for example by dynamic mechanical analysis.

According to a particularly preferred embodiment, the synthetic polymer thus is a redispersible powder comprising a copolymer of vinyl acetate and ethylene with a glass transition temperature of between -45 °C - +10 °C, preferably -20 °C - 0 °C.

According to embodiments, the synthetic polymer has a minimal film forming temperature of between -5°C and +10°C.

Component A of the present invention comprises at least one synthetic polymer in 1 - 5 mass parts, each based on the total dry weight of the component A.

The term aggregate as used herein means a particulate material that does not participate in the hydraulic reaction. Examples for aggregates include sand, gravel, slag, and crushed stone such as for example crushed limestone or crushed dolomite. Aggregates can be characterized by their granulometry, which can be measured for example by sieve analysis according to standard DIN 66165-2:2016.

Aggregates can be any materials known to the person skilled in the art. Examples for aggregates comprise but are not limited to sands, preferably silica sands, quartz sands, river sands, crushed rocks, preferably crushed carbonate materials, specifically crushed limestone, chalk and/or marble, and/or gravel. According to especially preferred embodiments, aggregates to be used in a waterproofing membrane of the present invention are sands and/or calcium carbonate. According to especially preferred embodiments, mixtures of two or more different aggregates are used in a waterproofing membrane of the present invention. Aggregates may differ in their chemical composition and/or in their granulometry. A particularly preferred combination of aggregates is sand and calcium carbonate.

Aggregates used in the context of the present invention preferably are characterized by a granulometry with a grain size between 0.01 and 10 mm, preferably 0.05 and 5 mm, most preferred between 0.06 and 1 mm, meaning that less than 1% of aggregate used has a particle size outside the given ranges when measured according to DIN 66165-2:2016.

Component A of the present invention comprises at least one aggregate in 20 - 80 mass parts, preferably 30 - 50 mass parts, each based on the total dry weight of the component A.

Component A of a waterproofing membrane of the present invention may further comprise other substances such as but not limited to non-reactive fillers (e.g. very fine calcium carbonate), fibers (e.g. cellulose fibers, glass fibers and/or PE fibers), rheology modifiers (especially layered silicates), plasticizers (especially polycarboxylate ethers), defoamers, accelerators, retarders, pigments, chromium VI reducers, biocides, wetting agents, and/or de-dusting additives. According to one embodiment, the component A additionally comprises a plasticizer, preferably a polycarboxylate ether. Polycarboxylate ethers are especially suitable if a waterproofing membrane of the present invention is applied by a continuous spray application as defined below. This ensures that mixing with water and pumping through hoses is possible without problems. According to another embodiment, the component A additionally comprises a de-dusting additive which is a hydrocarbon. This ensures that less dust is emitted during handling and especially mixing of the component A and the component B. A de-dusting additive is particularly suitable if the component A is a dry composition in powder form. According to yet other embodiments, the component A of the present invention comprises a filler, preferably fine limestone, and an accelerator selected from the group consisting of aluminium sulphate and alkali metal or alkaline earth metal nitirite, nitrate, thiocyanate, oxide, hydroxide, carbonate, and silicate.

Component B of the present invention comprises or consists of an aqueous emulsion of bitumen.

According to preferred embodiments, the aqueous emulsion of bitumen of the present invention is an anionic aqueous emulsion of bitumen. Preferably, the aqueous emulsion of bitumen, especially the anionic aqueous emulsion of bitumen, is an emulsion of bitumen in water. In other words, the continuous phase of the emulsion preferably is water. An anionic aqueous emulsion is an emulsion where the droplets of the dispersed phase carry a negative charge. Preferably the negative charge is brought about by the presence of anionic surfactants.

According to embodiments, the content of bitumen in the aqueous emulsion of bitumen, preferably in the anionic aqueous emulsion of bitumen, is 10 - 70 w%, preferably 12 - 60 w%, more preferably 12 - 40 w%, especially 15 - 20 w%, in each case based on the total weight of the emulsion. It has been found that when the content of bitumen in the component B is lower than 10 w% the waterproofing properties are not achieved. It has been further found that when the content of bitumen in the component B is higher than 40 w% the flow properties of the waterproofing membrane are reduced and application becomes more difficult.

An especially preferred aqueous emulsion of bitumen is an anionic aqueous emulsion of bitumen with 10 - 70 w%, preferably 12 - 60 w%, more preferably 12 - 40 w%, especially 15 - 20 w%, in each case based on the total weight of the emulsion, of bitumen, and where the particle size of the emulsified droplets is such that at least 99% are smaller than 150 µm.

In a particularly advantageous embodiment of the present invention, the component B additionally comprises a thickener, especially a thickener comprising modified urea. A thickener, especially a thickener comprising modified urea, improves the storage stability of the component B. An effective amount of thickener, preferably of a thickener comprising modified urea, can be between 0.01 - 3 w%, preferably 0.1 - 1 w%, based on the total weight of the component B.

A component B of the present invention may additionally comprise water.

It is furthermore possible to add further additives to the component B of the present invention. Such further additives may be selected from an hydrophobizing agents, defoamers, biocides, pigments, wetting agents. The addition of hydrophobizing agents may be useful to further enhance the waterproofing properties of the waterproofing membrane of the present invention. Suitable hydrophobizing agents can be fatty acids and their salts, silanes and/or siloxanes, silicones.

It is furthermore possible, and in certain cases preferred, if the component B additionally comprises a synthetic polymer as described above.

A preferable component B according to the present invention thus comprises or consists of:
(i) an aqueous emulsion of bitumen, preferably an anionic aqueous emulsion of bitumen, especially with a content of bitumen of between 10 - 70 w%, preferably 12 - 60 w%, more preferably 12 - 40 w%, especially 15 - 20 w%, in each case relative to the total weight of the aqueous emulsion of bitumen,
(ii) optionally additional water,
(iii) optionally a thickener, preferably of a thickener comprising modified urea,
(iv) optionally a synthetic polymer, and
(v) optionally further additives.

A particularly preferable component B according to the present invention comprises or consists of:
(i) 100 mass parts of an aqueous emulsion of bitumen, preferably an anionic aqueous emulsion of bitumen, especially with a content of bitumen of between 10 - 70 w%, preferably 12 - 60 w%, more preferably 12 - 40 w%, especially 15 - 20 w%, in each case relative to the total weight of the aqueous emulsion of bitumen,
(ii) 0 - 1000 mass parts, preferably 150 - 900 mass parts of water,
(iii) 0 - 25 mass parts, preferably 1 - 10 mass parts of a thickener, preferably of a thickener comprising modified urea,
(iv) optionally a synthetic polymer, and
(v) optionally further additives.

According to some embodiments, a mixture of the first component A and the second component B is self-levelling. The term self-levelling refers to the ability of said mixture to free flow and to form a flat surface when poured on a support at 23°C and 1013 mbar. In the present context, a self-levelling material has a spreading diameter directly after mixing with water and as measured according to standard EN 12706:1999 of at least 120 mm, preferably of at least 135 mm.

According to further embodiments, the mixture of the first component A and the second component B has non-sag properties. The term non-sag properties relate to the ability of said mixture not to flow down or drip when applied on surfaces with an inclination or overhead at 23°C and 1013 mbar.

The mix ratio of component A and component B is not particularly limited. However, according to certain embodiments, the mix ratio of component A to component B is such, that self-levelling properties of the mixture result. Self-levelling is to be understood as explained above. According to further embodiments, the mix ratio of component A to component B is such that the weight ratio of water to the hydraulic binder is between 0.3 - 1.5, preferably between 0.33 - 0.6. According to still further embodiments, the mix ratio of component A to component B is such that the weight ratio of the aqueous bitumen emulsion to the hydraulic binder is between 0.01:1 and 2:1, preferably 0.03:1 and 1:1, more preferably 0.03:1 and 0.3:1.

In another aspect the present invention relates to a process for the waterproofing of porous construction materials, said process comprising the steps of
- providing a first component A and a second component B, said first component A comprising or consisting of
   a) 5 - 60 mass parts, preferably 30 - 60 mass parts, more preferably 45 - 55 mass parts of a hydraulic binder,
   b) 0.5 - 15 mass parts, preferably 1 - 5 mass parts of a redispersible polymer powder,
   c) 20 - 80 mass parts, preferably 30 - 50 mass parts of aggregates, and
   d) optionally further additives
   and said second component B comprising or consisting of an aqueous emulsion of bitumen,
- mixing said first component A and said second component B,
- applying the mixture thus obtained to a porous construction material, and
- optionally hardening the applied mixture.

Especially, the present invention relates to a process for the waterproofing of porous construction materials, characterized in that the hydraulic binder is a ternary binder comprising or consisting of
a1) 20 - 50, preferably 30 - 40 mass parts of Portland Cement,
a2) 20 - 50, preferably 30 - 40 mass parts of aluminate cement, and
a3) 10 - 50, preferably 15 - 40, especially 20 - 30 mass parts of a source of calcium sulfate, and the component B comprises or consists of
   (i) 100 mass parts of an aqueous emulsion of bitumen, preferably an anionic aqueous emulsion of bitumen, especially with a content of bitumen of between 10 - 70 w%, preferably 12 - 60 w%, more preferably 12 - 40 w%, especially 15 - 20 w%, in each case relative to the total weight of the aqueous emulsion of bitumen,
   (ii) 0 - 1000 mass parts, preferably 150 - 900 mass parts of water,
   (iii) 0 - 25 mass parts, preferably 1 - 10 mass parts of a thickener, preferably of a thickener comprising modified urea,
   (iv) optionally a synthetic polymer, and
   (V) optionally further additives.

The mix ratio of component A and component B in a process of the present invention is not particularly limited. However, according to certain embodiments, the mix ratio of component A to component B is such that self-levelling properties of the mixture result. Self-levelling is to be understood as explained above. According to further embodiments, the mix ratio of component A to component B is such, that the weight ratio of water to the hydraulic binder is between 0.3 - 1.5, preferably between 0.33 - 0.6. According to still further embodiments, the mix ratio of component A to component B is such that the weight ratio of the aqueous bitumen emulsion to the hydraulic binder is between 0.01:1 and 2:1, preferably 0.03:1 and 1:1, more preferably 0.03:1 and 0.3:1.

Porous construction materials in the sense of the present invention are construction materials with a porosity large enough to allow the uptake of water, the transport of water by capillary suction, or the transport of water vapor by a gradient of water vapor pressure. Porous construction materials are preferably selected from the list consisting of cementitious materials, especially concrete or mortar, screeds, bricks, especially clay bricks, poroton stone, sand limestone, aerated concrete stone, ceramic tiles with a water absorption of > 0.5 % as measured according to EN 1062-3, calcium sulfate based materials, and wood. It is most preferred, within the context of the present invention, that the process for the waterproofing of porous construction materials is a process for the waterproofing of cementitious materials or screeds. A cementitious material is a material which comprises cement as the main binder component. In a preferred embodiment, the cementitious material is hardened concrete or mortar. Screeds are typically based on calcium sulfate based binders, cementitious binders, or MgO.

Methods and devices for mixing of component A and component B of a waterproofing membrane of the present invention are not particular limited and are known to the person skilled in the art. It is for example possible to mix component A and component B of a waterproofing membrane of the present invention by means of a hand held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise. Continuous mixing offers the advantage of a high material throughput.

It is possible to apply said mixture of component A and component B of a waterproofing membrane of the present invention by any means known to the person skilled in the art. According to one embodiment, the mixture of component A and component B is applied by trowel, brush or roller. The use of a notched trowel can be particularly useful to achieve a desired layer thickness. According to another embodiment, the mixture of component A and component B is applied in a spray application.

Spray applications have the advantage that the application can be done very quickly and in a continuous manner. Suitable equipment for such spray applications is known to the person skilled in the art. According to an especially preferred embodiment, a process of the present invention is run in a continuous manner. Such process is characterized in that of component A and component B are mixed continuously and are supplied to a spray head in a continuous manner. This allows for a continuous spray application. According to embodiments, the mixture of component A and component B is thus applied in a spray application, preferably a continuous spray application.

A process of the present invention may also comprise a second or third step of applying the mixture of component A and component B to a porous construction material. It is, in other words, possible to apply the mixture of component A and component B in a process of the present invention for waterproofing of porous construction materials in one layer, in two layers or in three layers. According to a particularly preferred embodiment, a process of the present invention comprises two steps of applying the mixture of component A and component B to a porous construction material. The mixture of component A and component B is thus applied in two layers.

According to embodiments, the mixture of component A and component B is applied in a process of the present invention to a porous construction material to yield a total layer thickness of 0.5 - 50 mm, preferably 1 - 40 mm, more preferably 2 - 25 mm, especially 3 - 10 mm.

According to embodiments, in a process of the present invention, the mixture of component A and component B is applied in a one-step procedure as one single layer or in a two-step procedure as two layers to yield a total layer thickness of 0.5 - 50 mm, preferably 1 - 40 mm, more preferably 2 - 25 mm, especially 3 - 10 mm. It can be preferred to apply the mixture of component A and component B in in two layers. This can help to avoid imperfections such as air bubbles or inhomogeneous layer thickness and thus leads to a particularly good waterproofing performance.

Hardening starts upon mixing of the component A and the component B and proceeds with time. Physical properties, e.g. compressive strength, adhesion strength, etc. are developed thereby. A mixture of component A and component B will harden at various temperatures. It is, however, preferred to harden the mixture of component A and component B at temperatures between +4 °C and +50 °C, preferably between +5 °C and +35 °C. A process of the present invention is thus preferably carried out at temperatures between +4 °C and +50 °C, preferably between +5 °C and +35 °C.

It is an advantage of the mixture of component A and component B to quickly develop a dry surface. This ensures that a subsequently applied material, e.g. a second layer of the mixture of component A and component B, a levelling material, an adhesive or a covering material, can be applied without long waiting times. A maximum waiting time can be, for example, 120 minutes, preferably 60 minutes, more preferably 30 minutes.

It is possible to include further steps into a process of the present invention. Such further steps typically are directed to further increase the performance of a porous construction material treated in a process for waterproofing as described above. According to embodiments, a process of the present invention includes one or more further steps selected from cleaning the surface of the porous construction material, priming the surface (especially in cases where the construction material has a very high porosity), and application of further layers on top of the mixture of component A and component B, such further layers being selected e.g. levelling compounds, adhesives, and/or coverings such as tiles, wood or paints.

In another aspect, the present invention relates to a porous construction material, for example as part of a building, treated in a process for waterproofing as described above.

According to embodiments, a porous construction material treated in a process for waterproofing as described above can be part of an outside structure which is subject to contact with water, for example caused by dew, rain, spray, and/or tides. According to further embodiments, a porous construction material treated in a process for waterproofing as described above can be part of basement walls, floor structures, drainages, pipes, silos, stairs, bathrooms, kitchens, swimming pools, balconies, terraces, ponds or basins, harbor structures and works of civil engineering, e.g. tunnels. A porous construction material treated in a process for waterproofing as described above can for example be part of a tiled structure, especially it is the substrate for the application of ceramic tiles.

A process of the present invention is suitable to be integrated in the construction of new structures and/or in the refurbishment of existing structures. It is, for example possible, to integrate a process of the present invention into the construction of basement walls, floor structures, drainages, pipes, silos, stairs, bathrooms, kitchens, swimming pools, balconies, terraces, ponds or basins, harbor structures and works of civil engineering, e.g. tunnels. A process of the present invention is especially suitable to be integrated in the construction or refurbishment of buildings according to principles 1, 2, 5, 6, 7, and 8, especially according to principles 1, 2, and 8, according to EN 1504-9.

According to embodiments, a two-component waterproofing membrane of the present invention is used in a process for the construction or refurbishment of buildings according to principles 1, 2, 5, 6, 7, and 8, especially according to principles 1, 2, and 8, according to EN 1504-9.

According to further embodiments, a two-component waterproofing membrane of the present invention is used as a liquid-applied water impermeable product for use beneath ceramic tiling bonded with adhesives. Such use is described in standard EN 14891:2017.

According to still further embodiments, a two-component waterproofing membrane of the present invention is used as a self-levelling product, especially in the construction of floors or floor structures.

In another aspect the present invention relates to a kit of parts suitable to form a waterproofing membrane as described above or suitable to be used in a process for the waterproofing of porous construction materials as described above. The kit of parts is characterized in that it consists of a first component A and a second component B, said first component A comprising or consisting of
a) 5 - 60 mass parts, preferably 30 - 60 mass parts, more preferably 45 - 55 mass parts of a hydraulic binder,
b) 0.5 - 15 mass parts, preferably 1 - 5 mass parts of at least one synthetic polymer,
c) 20 - 80 mass parts, preferably 30 - 50 mass parts of aggregates, and
d) optionally further additives
and said second component B comprising or consisting of an aqueous emulsion of bitumen.

The further details and embodiments as described above are also meant to apply in the case of a kit of parts of the present invention.

The following examples will further illustrate the present invention. They are not intended to limit the scope of the invention in any way.

### Examples

The following table 1 provides an overview of the raw materials used.

**Table 1: raw materials used**

| | |
|---|---|
| CAC (Type 1) | Calcium aluminate cement: mixture of Ternal RG and Ternal LC from Imerys Aluminates |
| CAC (Type 2) | Calcium aluminate cement: Isidac 40 from Cimsa, Turkey |
| CaSO₄ | Alpha-calciumsulfate hemihydrate, Raddichem 27 from Casea |
| OPC | CEM I 52.5R (Milke Premium) |
| CaCO₃ (Type 1) | Wülfrather Kalksteinmehl 20 - 90 µm |
| CaCO₃ (Type 2) | 1.5:1 mixture by weight of calcium carbonate with 0 - 80 µm and with 0.1 - 0.3 mm |
| RDP | Redispersible polymer powder based on co(polyvinylacetate-polyvinylversatate) with a minimal film forming temperature of 0°C |
| Additives | Mixture of accelerators (lithium carbonate, sodium carbonate), retarders (tartaric acid, citric acid), thickeners (cellulose ether), plasticizers (polycarboxylate ethers), defoamer |
| Bitumen emulsion (Type 1) | Anionic aqueous bitumen emulsion (60% solids content) |
| Bitumen emulsion (Type 2) | Anionic aqueous bitumen emulsion (55% solids content); softening point 50 °C (acc. Standard EN 1427) |
| Thickener | Solution of modified urea in methyl 5-(dimethylamino)-2-methyl-5-oxopentanoate (40% solids) |

### Example 1

For example 1, the inventive components A-1 and A-2 as well as inventive components B-1 to B-3 were prepared with compositions as indicated in table 2. To prepare the respective component, all ingredients were mixed on blade mixer at 300 - 600 rpm until visually fully homogeneous. Pure water was used as comparative component BC-1. Waterproofing membranes E-1 to E-3, which are according to the present invention, were prepared by mixing the respective components A and B as indicated in below table 2 in the given weight ratio. Comparative waterproofing membrane EC-1, which is not according to the present invention, was prepared by mixing component A-2 with pure water.

Spreading diameter was measured on the mixtures of component A and B following a protocol similar to the standard EN 12706 after the time indicated in the below table 2.

To test the tensile adhesion strength of subsequently applied materials and the waterproofing properties, the following test protocol was followed:
Component A and B of the waterproofing membranes E1 to E-3 and EC-1 of table 2 were mixed for 2 min at 600 rpm with a blade mixer. The mixtures were applied with a wet layer thickness of 3 mm on the surface of concrete slabs. After 24 h, a homogeneous PVC covering (acc. EN 649) was adhered to the surface of the membranes with a dispersion floor adhesive (e.g. SikaBond-150 Premium Floor). After 7 days at 23°C, the concrete slabs were placed over a water reservoir and the edges were sealed with water-vapor tight sealant (e.g. aluminium covered adhesive tape) so that the water vapor was trapped under the concrete slab. The water vapor could only reach the floor adhesive layer by passing through the applied waterproofing membrane. This assembly was kept at 23 °C for 21 weeks. After this time five squares of 5 x 5 cm² were cut into the PVC and the tensile adhesion strength acc. EN 12004-2 was measured. The appearance of the floor adhesive was determined visually.

**Table 2: Compositions of waterproofing membranes E-1 to E3 and EC-1 (all raw material dosages given in [g])**

| | **E-1** | **E-2** | **E-3** | **EC-1** |
|---|---|---|---|---|
| *Component A* | *A-1* | *A-1* | *A-1* | *A-1* |
| CAC (Type 1) | 20 | 20 | 20 | 20 |
| CaSO₄ | 12.4 | 12.4 | 12.4 | 12.4 |
| OPC | 20 | 20 | 20 | 20 |
| Sand, 0.1-0.3 mm | 31.6 | 31.6 | 31.6 | 31.6 |
| CaCO₃ (Type 1) | 13.3 | 13.3 | 13.3 | 13.3 |
| RDP | 2 | 2 | 2 | 2 |
| Additives | 0.7 | 0.7 | 0.7 | 0.7 |

| *Component B* | *B-1* | *B-2* | *B-3* | *BC-1* |
|---|---|---|---|---|
| Water | 89.7 | 85.6 | 87.1 | 100 |
| Bitumen emulsion (Type 1) | 10.3 | 14.4 | 12 | |
| Thickener | | | 0.5 | |
| Defoamer | | | 0.4 | |
| *Mixing ratio A:B (by weight)* | 4.3 | 4 | 4.8 | 4.8 |
| spreading diameter 3 min after mixing [mm] | n.m. | n.m. | 320 | 330 |
| spreading diameter 15 min after mixing [mm] | n.m. | n.m. | 310 | 320 |
| tensile adhesion strength after 21 weeks [MPa] | 0.48 | 0.53 | 0.45 | 0 |
| appearance of floor adhesive after 21 weeks | solid | solid | solid | liquid |

| | | | | |
|---|---|---|---|---|
| n.m.: not measured | | | | |

As can be seen from the above table 2, the waterproofing membranes E-1 to E-3 reduce the amount of moisture to a level that is not harmful for the floor adhesive. The floor adhesive remains solid and the adhesion strength is sufficient. The membrane EC-1 does not reduce the moisture level sufficiently. In consequence, the floor adhesive is re-emulsified by the moisture and becomes liquid again.

### Example 2

For example 2, the inventive components A-4 and B-4 were prepared with compositions as indicated in table 3. To prepare the respective component, all ingredients were mixed on low shear mixers until visually fully homogeneous. Waterproofing membranes E-4 which is according to the present invention, was prepared by mixing the respective components A and B as indicated in below table 3 in the given weight ratio.

Cold flexibility was measured according to standard EN 1109.

Water absorption was measured as follows: the product to be tested is cured in large sheet for 7 days at 23°C, 50% r.h. and an air velocity of <0.2 m/s. Then test specimen of size 100 x 50 x 2 mm are cut out and weighed. The test specimen are dried in an oven at 50 °C until a constant weight is reached. Then the test specimen are conditioned for 24 h at 23°C, 50% r.h. and an air velocity of <0.2 m/s and are subsequently weighed. This weight is the initial weight. Subsequently, the test specimen are completely submersed in demineralized water. Weighing of the test specimen is done every 24h after submersion. The surface of the test specimen is gently wiped with paper before each weighing. The weighing is repeated until a constant weight is reached. The water absorption corresponds to the weight gain of the test specimen after water submersion expressed in % relative to the initial weight.

Elongation at break and tensile strength were measured according to standard ISO 37.

Adhesion strength was measured according to standard EN 1542.

**Table 3: Composition of waterproofing membrane E-4 (all raw material dosages given in [g])**

| | **E-4** |
|---|---|
| *Component A* | *A-4* |
| CAC (Type 2) | 15 |
| Sand, 0.2-0.4 mm | 58 |
| CaCO₃ (Type 2) | 26.7 |
| Additives | 0.3 |

| *Component B* | *B-4* |
|---|---|
| Water | 35 |
| Polyacrylate with Tg -34 °C | 45 |
| Bitumen emulsion (Type 2) | 20 |
| *Mixing ratio A:B (by weight)* | 3:1 |

| *Results* | |
|---|---|
| Cold flexibility | -25 °C |
| Water absorption [%] | 8.8 |
| Elongation at break [%] | 142 |
| Tensile strength [MPa] | 1.39 |
| Adhesion strength [MPa] | 0.41 |

As can be seen from the above table 3, a low water absorption can be achieved and good flexibility as well as adhesion can be achieved with a waterproofing membrane of the present invention.

## Claims

1. A two-component waterproofing membrane consisting of a first component A and a second component B, said first component A comprising or consisting of
a) 5 - 60 mass parts, preferably 30 - 60 mass parts, more preferably 45 - 55 mass parts, of a hydraulic binder,
b) 0.5 - 15 mass parts, preferably 1 - 5 mass parts of at least one synthetic polymer,
c) 20 - 80 mass parts, preferably 30 - 50 mass parts of aggregates, and
d) optionally further additives
and said second component B comprising or consisting of an aqueous emulsion of bitumen.

2. A two-component waterproofing membrane as claimed in claim 1, **characterized in that** the hydraulic binder is selected from Portland cement, aluminate cement, calcium sulfoaluminate cement, a source of calcium sulfate, natural hydraulic lime, slag, pozzolanes, and mixtures thereof.

3. A two-component waterproofing membrane as claimed in claims 1, **characterized in that** the hydraulic binder is a ternary binder comprising or consisting of
a1) 20 - 50, preferably 30 - 40 mass parts of Portland Cement,
a2) 20 - 50, preferably 30 - 40 mass parts of aluminate cement, and
a3) 10 - 50, preferably 15 - 40, especially 20 - 30 mass parts of a source of calcium sulfate.

4. A two-component waterproofing membrane as claimed in claim 3, **characterized in that** the source of calcium sulfate is α-calcium sulfate hemihydrate.

5. A two-component waterproofing membrane as claimed in at least one of the preceding claims, **characterized in that** the aqueous emulsion of bitumen is an anionic aqueous emulsion of bitumen.

6. A two-component waterproofing membrane as claimed in at least one of the preceding claims, **characterized in that** the bitumen content in the aqueous emulsion of bitumen is from 10 - 70 w%, preferably 12 - 60 w%, more preferably 12 - 40 w%, especially 15 - 20 w%, each based on the total weight of the emulsion.

7. A two-component waterproofing membrane as claimed in at least one of the preceding claims, **characterized in that** the component B additionally comprises a thickener, especially a thickener comprising modified urea.

8. A two-component waterproofing membrane as claimed in at least one of the preceding claims, **characterized in that** the component B additionally comprises a synthetic polymer.

9. A two-component waterproofing membrane as claimed in at least one of the preceding claims, **characterized in that** the component B comprises or consists of
(i) 100 mass parts of an aqueous emulsion of bitumen, preferably an anionic aqueous emulsion of bitumen, especially with a content of bitumen of between 10 - 70 w%, preferably 12 - 60 w%, more preferably 12 - 40 w%, especially 15 - 20 w%, in each case relative to the total weight of the aqueous emulsion of bitumen,
(ii) 0 - 1000 mass parts, preferably 150 - 900 mass parts of water,
(iii) 0 - 25 mass parts, preferably 1 - 10 mass parts of a thickener, preferably of a thickener comprising modified urea,
(iv) optionally a synthetic polymer, and
(v) optionally further additives.

10. A two-component waterproofing membrane as claimed in at least one of the preceding claims, **characterized in that** a mixture of the first component A and the second component B is self-levelling.

11. A two-component waterproofing membrane as claimed in at least one of the preceding claims, **characterized in that** the mix ratio of component A to component B is such that the weight ratio of the aqueous bitumen emulsion to the hydraulic binder is between 0.01:1 and 2:1, preferably 0.03:1 and 1:1, more preferably 0.03:1 and 0.3:1.

12. Process for the waterproofing of porous construction materials, said process comprising the steps of
- providing a first component A and a second component B, said first component A comprising or consisting of
a) 5 - 60 mass parts, preferably 30 - 60 mass parts, more preferably 45 - 55 mass parts of a hydraulic binder,
b) 0.5 - 15 mass parts, preferably 1 - 5 mass parts of at least one synthetic polymer,
c) 20 - 80 mass parts, preferably 30 - 50 mass parts of aggregates, and
d) optionally further additives
and said second component B comprising or consisting of an aqueous emulsion of bitumen,
- mixing said first component A and said second component B,
- applying the mixture thus obtained to a porous construction material, and
- optionally hardening the applied mixture.

13. Process for the waterproofing of porous construction materials as claimed in claim 12, **characterized in that** the hydraulic binder is a ternary binder comprising or consisting of
a1) 20 - 50, preferably 30 - 40 mass parts of Portland Cement,
a2) 20 - 50, preferably 30 - 40 mass parts of aluminate cement, and
a3) 10 - 50, preferably 15 - 40, especially 20 - 30 mass parts of a source of calcium sulfate, and the component B comprises or consists of
(i) 100 mass parts of an aqueous emulsion of bitumen, preferably an anionic aqueous emulsion of bitumen, especially with a content of bitumen of between 10 - 70 w%, preferably 12 - 60 w%, more preferably 12 - 40 w%, especially 15 - 20 w%, in each case relative to the total weight of the aqueous emulsion of bitumen,
(ii) 0 - 1000 mass parts, preferably 150 - 900 mass parts of water,
(iii) 0 - 25 mass parts, preferably 1 - 10 mass parts of a thickener, preferably of a thickener comprising modified urea,
(iv) optionally a synthetic polymer, and
(v) optionally further additives.

14. Porous construction material, for example as part of a building, treated in a process for waterproofing as claimed in claim 12 or 13.

15. Kit of parts suitable to form a waterproofing membrane according to at least one of claims 1 - 11 or suitable to be used in a process according to claim 12 or 13, **characterized in that** it consists of a first component A and a second component B, said first component A comprising or consisting of
a) 5 - 60 mass parts, preferably 30 - 60 mass parts, more preferably 45 - 55 mass parts of a hydraulic binder,
b) 0.5 - 15 mass parts, preferably 1 - 5 mass parts of at least one synthetic polymer,
c) 20 - 80 mass parts, preferably 30 - 50 mass parts of aggregates, and
d) optionally further additives
and said second component B comprising or consisting of an aqueous emulsion of bitumen.

16. Use of a two-component waterproofing membrane as claimed in at least one of claims 1 - 11 in a process for the construction or refurbishment of buildings according to principles 1, 2, 5, 6, 7, and 8, especially according to principles 1, 2, and 8, according to EN 1504-9, or as a liquid-applied water impermeable product for use beneath ceramic tiling bonded with adhesives, or as a self-levelling product, especially in the construction of floors or floor structures.
